# EUROPEAN PATENT APPLICATION

(11) **EP 0 536 558 A1**
(43) Date of publication of application: **14.04.1993**
(21) Application number: 92115648.5
(22) Date of filing: 14.09.1992
(51) Int. Cl.: G11B 7/00, G11B 7/09

(54) **Apparatus for optically recording and reproducing information**

(30) Priority: 09.10.1991 JP 262037/91
(71) Applicant: NIPPON CONLUX CO., LTD., Chiyoda-ku Tokyo-To (JP)
(72) Inventor: Yamazaki, Koichi, Sakado-Shi, Saitama-Ken (JP); Noda, Kazuo, Yokohama-Shi, Kanagawa-Ken (JP); Onodera, Akira, Kawagoe-Shi, Saitama-Ken (JP)
(74) Representative: Reichel, Wolfgang, Dipl.-Ing.

(57) **Abstract**

An apparatus for optically recording and reproducing information with high accuracy is provided which can deal with a change in the operating conditions of the signal processing systems. The apparatus having a light beam generator, an information signal processing system including an amplifier, and a servo control signal processing system including an amplifier, for optically recording and reproducing information to and from an optical information storage medium while reciprocally moving the storage medium back and forth and applying a light beam from the light beam generator to the storage medium, including: a holding circuit provided between the input and output terminals of each of the amplifiers, the holding circuit being connected to and disconnected from each of the amplifiers; a generator for generating a first period signal representative of an initial stationary period of the storage medium during the reciprocal movement and a second period signal representative of a stop period of the storage medium at the turning point of the reciprocal movement; a controller for turning off the light beam generator in response to the first period signal; and a switching unit for connecting the holding circuit between the input and output terminals of each of the amplifiers in response to the second period signal.

## Description

### BACKGROUND OF THE INVENTION

### (Field of the Invention)

The present invention relates to an apparatus for optically recording and reproducing information to and from an optical information storage medium, and more particularly to an improvement on an apparatus for optically recording and reproducing information to and from an optical information storage medium with high accuracy while reciprocally moving the storage medium.

### (Description of the Related Art)

Various types of optical information storage medium are known. One example is an optical information storage medium called an optical card which is reciprocally moved back and forth for the information recording and reproducing. In recording and reproducing information to and from an optical card, a light beam is converged into a spot shape and focused on the surface of the optical card while the card is reciprocally moved back and forth in the longitudinal direction of the card.

While the card is moved, the surface and track thereof may vibrate or shift because of a warp of the card, a position displacement of the reciprocal motion mechanism, a setting error of the card, and other reasons. As a result, there occur an incorrectly focused light spot and a displaced light spot from the track.

To solve such problems, information recording and reproducing have been heretofore performed while servo controlling the focusing and tracking of a converging lens in a two-dimensional manner, to always and correctly focusing the light spot on the surface of an optical card and tracing the guide track.

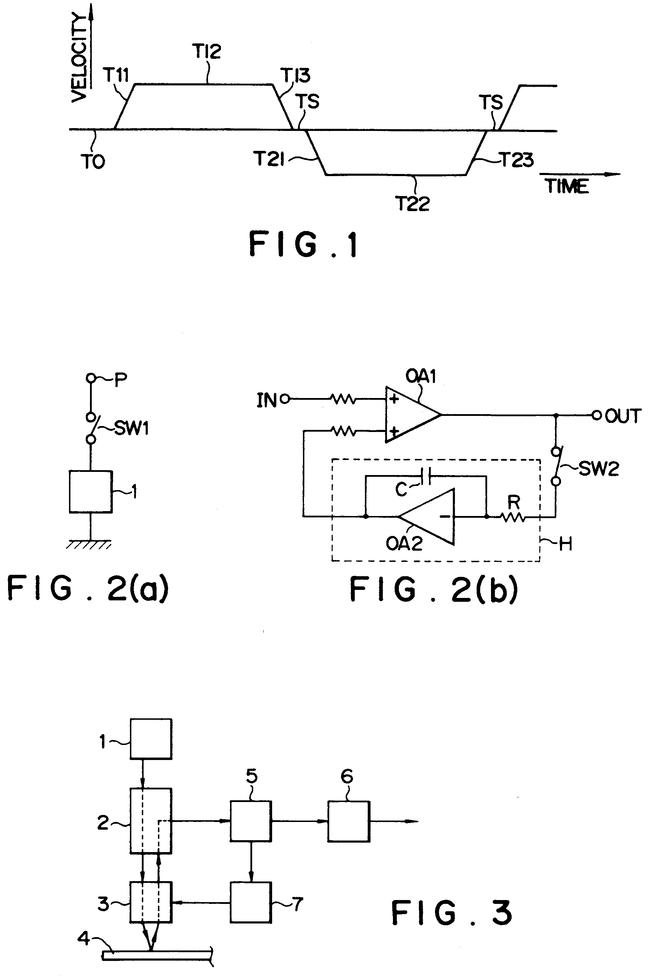

Such a servo control signal processing system is constructed as shown in Fig. 3 in combination with an information signal processing system. Specifically, a light beam from a light beam generator 1 is applied to an optical card 4 via an optical system 2 including a collimator lens and the like and a driver unit 3 including a converging lens. Part of the applied light beam is reflected from the optical card, returns to the driver unit 3 and optical system 2, and is converted to an electrical signal by a signal detector 5. This electrical signal contains an information signal and a servo control signal inclusive of the focusing and tracking information. The information signal is applied to an information signal amplifier 6, whereas the servo control signal is amplified by a servo signal amplifier 7 and applied to the driver unit 3.

The information signal amplifier 6 and servo signal amplifier 7 each have an off-set changing with an environmental temperature and time. The signal detector 5 has its dark current to be changed. Therefore, the operating points of the amplifiers change so that the d.c. component of the information signal changes correspondingly, or the light spot becomes out-of-focus or is displaced from the center of the track, unable to provide correct information recording and reproducing.

### SUMMARY OF THE INVENTION

The present invention has been made under such circumstances. It is an object of the present invention to provide an apparatus for optically recording and reproducing information capable of dealing with a change in the operation conditions of the signal processing systems.

In order to achieve the above object, the present invention provides an apparatus having a light beam generator, an information signal processing system including an amplifier, and a servo control signal processing system including an amplifier, for optically recording and reproducing information to and from an optical information storage medium while reciprocally moving the storage medium back and forth and applying a light beam from the light beam generator to the storage medium, comprising: a holding circuit provided between the input and output terminals of each of the amplifiers, the holding circuit being connected to and disconnected from each of the amplifiers; means for generating a first period signal representative of an initial stationary period of the storage medium during the reciprocal movement and a second period signal representative of a stop period of the storage medium at the turning point of the reciprocal movement; control means for turning off the light beam generator in response to the first period signal; and switching means for connecting the holding circuit between the input and output terminals of each of the amplifiers in response to the second period signal.

Since an optical information storage medium is reciprocally moved back and forth, the reciprocal movement includes the initial stationary period and the stop period at the turning point of the movement. During such periods, means for generating the period signals generates the first and second period signals. Upon reception of the first and second period signals, the control means turns off the light beam generator and the switching means connects the holding circuit between the input and output terminals of each of the amplifiers. As a result, the light beam generator turns off with a dark current, if any, flowing evenly, and the holding circuit is connected to each amplifier while the latter has no input signal. Therefore, an off-set value, if any, is stored in the holding circuit.

When an optical information storage medium starts reciprocally moving and the period signal disappears, the light beam generator emits a light beam. In response to this, the information signal processing system and servo control signal processing system operate. Each amplifier amplifies an input signal, with the off-set value stored in the holding circuit being set to the amplifier.

As described above, according to the present invention, in an apparatus for optically recording and reproducing information to and from an optical information storage medium with high accuracy while reciprocally moving the storage medium, during the initial stationary period or during the stop period of the optical information storage medium, the light beam generator is turned off and the hold circuit is connected between the input and output terminals of the amplifiers of the information signal processing system and servo control signal processing system to store off-set values. In accordance with the stored off-set values, the information signal and servo control signal processing systems operate during the reciprocal movement. Therefore, errors to be caused by a dark current of the light beam generator and by an off-set of each amplifier can be eliminated each time the medium moves reciprocally, thereby always providing correct information recording and reproducing.

### BRIEF DESCRIPTION OF THE DRAWINGS

In the accompanying drawings:
Fig. 1 is a graph showing the relation between time and velocity while an optical information storage medium is reciprocally moved back and forth for the information recording and reproducing;
Figs. 2(a) and 2(b) are circuit diagrams showing the main part of the embodiment of the apparatus according to the present invention; and
Fig. 3 is a schematic diagram showing the structure of a conventional apparatus for optically recording and reproducing information.

### DETAILED DESCRIPTION OF THE PREFERRED EMBODIMENT

The diagram of Fig. 1 shows a movement of an optical information storage medium of an apparatus for optically recording and reproducing information according to the present invention. The abscissa indicates time and the ordinate indicates velocity. An optical information storage medium or optical card is initially in a stop state during both the information recording and reproducing operations. This period is an initial stationary period To. After this initial stationary period To, the optical information storage medium is moved for the information recording or reproducing. This movement is a repeated reciprocal movement in the positive and negative directions. The movement in the negative direction starts after a stop period Ts which is a short time period such as several milliseconds.

The movement in the positive direction includes an acceleration area T11, a constant velocity area T12, and a deceleration area T13. The control operation is same for both the positive and negative directions, although the direction itself is opposite. In the constant velocity area T12 or T22, information is recorded or reproduced.

The period while an optical information storage medium does not move, corresponds to the initial stationary period To shown in Fig. 1. When the storage medium starts moving, it is first accelerated in the acceleration area T11. When the medium reaches a predetermined velocity, it enters the constant velocity area T12 to record or reproduce information. Thereafter, the storage medium is decelerated in the deceleration area T13, and stops during the stop period Ts. Then, the optical card moves in the opposite direction and is accelerated in the acceleration area T21 to record or reproduce information. The optical card is then decelerated in the deceleration area T23, and stops during the stop period Ts. Thereafter, it again moves in the positive direction. Such operations are repeated a plurality of times necessary for the information recording or reproducing.

According to the apparatus of the present invention, during the initial stationary period and stop period of the reciprocal movement, the following two operations are performed:
(a) the light beam generator is turned off, and
(b) the holding circuit for each of the amplifiers of the information signal processing system and servo control signal processing system is turned on to hold an off-set value while the light beam generator is turned off.

Figs. 2(a) and 2(b) are circuit diagrams of a device for turning on and off the light beam generator and a holding circuit provided to the amplifier of the servo control signal processing system, respectively.

The circuit shown in Fig. 2(a) turns on and off the power to the light beam generator 1. In this circuit, a switch SW1 is provided between a power source terminal P and the light beam generator 1. The period signals representative of the initial stationary period and stop period are used to activate the switch SW1 for turning on and off the power to the light beam generator 1.

The circuit of Fig. 2(b) is a holding circuit H connected between the input and output terminals of an amplifier OA1 of the information signal processing system or servo control signal processing system. The holding circuit H is constructed of a switch SW2, an input resistor R, a feedback capacitor C, and an operational amplifier OA2. This swatch SW2 is turned on by the period signal to perform the off-set value holding operation.

Turning off the light beam generator shown in Fig. 2(a) and turning on the holding circuit H shown in Fig. 2(b) are effected at the same time. As a result, the holding circuit H holes an off-set value of the amplifier OA1 while the light beam generator 1 turns off. When the period signal disappears, the switch SW1 is closed to again turn on the light beam generator 1 and emit a light beam. At this time, the switch SW2 is opened so that the operational amplifier OA1 operates with the off-set value stored in the holding circuit H being set to the amplifier OA2. In this condition, the information recording or reproducing operation continues until the next stop period commences. During the next stop period, the light beam generator 1 is turned off and the holding circuit H is turned on.

In the above-described manner, each time an optical information storage medium enters the stop period or initial stationary period, an off-set of the amplifier OA1 and a dark current of the light beam generator 1 are compensated. Therefore, even if an off-set value changes with environmental temperature or time, it can be rapidly and reliably compensated.

In the above embodiment, an optical information storage medium is reciprocally moved relative to a fixed optical head. This invention is also applicable to the case where an optical head is reciprocally moved to a fixed optical information storage medium.

Furthermore, in the above embodiment, the switches SW1 and SW2 are turned off and on once for each initial stationary period or stop period of an optical information storage medium. The number of activations of the switches is not limited to once, but the switches may be turned off and on a plurality of times by using a pulse period signal.

## Claims

1. An apparatus having a light beam generator, an information signal processing system including an amplifier, and a servo control signal processing system including an amplifier, for optically recording and reproducing information to and from an optical information storage medium while reciprocally moving the storage medium back and forth and applying a light beam from the light beam generator to the storage medium, comprising:
a holding circuit provided between the input and output terminals of each of said amplifiers, said holding circuit being connected to and disconnected from each of said amplifiers;
means for generating a first period signal representative of an initial stationary period of said storage medium during the reciprocal movement and a second period signal representative of a stop period of said storage medium at the turning point of the reciprocal movement;
control means for turning off said light beam generator in response to said first period signal; and
switching means for connecting said holding circuit between said input and output terminals of each of said amplifiers in response to said second period signal.

2. An apparatus for optically recording and reproducing information according to claim 1, wherein said control means and said switching means operate a plurality of times in response to said first and second period signals.
